(19) Europäisches Patentamt
European Patent Office
Office européen des brevets

(11) EP 1 969 059 B1

# (12) EUROPEAN PATENT SPECIFICATION

(45) Date of publication and mention of the grant of the patent:
**08.04.2009 Bulletin 2009/15**

(21) Application number: **06849186.9**

(22) Date of filing: **21.12.2006**

(51) Int Cl.:
***C08L 69/00*** *(2006.01)*

(86) International application number:
**PCT/US2006/048939**

(87) International publication number:
**WO 2007/081536 (19.07.2007 Gazette 2007/29)**

## (54) THERMOPLASTIC COMPOSITION, METHOD OF MAKING, AND ARTICLES FORMED THEREFROM

THERMOPLASTISCHE ZUSAMMENSETZUNG, HERSTELLUNGSVERFAHREN UND DARAUS GEBILDETE GEGENSTÄNDE

COMPOSITION THERMOPLASTIQUE, PROCÉDÉ DE FABRICATION DE CELLE-CI ET ARTICLES FORMÉS À PARTIR DE CELLE-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.01.2006 US 326153**

(43) Date of publication of application:
**17.09.2008 Bulletin 2008/38**

(73) Proprietor: **GENERAL ELECTRIC COMPANY**
**Schenectady, NY 12345 (US)**

(72) Inventors:
- **CHAKRAVARTI, Shreyas**
  **Evansville, IN 47712 (US)**
- **LEENDERS, Chiel, Albertus**
  **NL-4793 CM Fijnaart (NL)**
- **SCHRAUWEN, Bernardus Antonius, Gerardus**
  **NL-5038 NT Tilburg (NL)**
- **VAN DE GRAMPEL, Robert, Dirk**
  **NL- GA Bergen op Zoom (NL)**

(74) Representative: **Modiano, Micaela Nadia**
**Modiano Josif Pisanty & Staub Ltd**
**Thierschstrasse 11**
**80538 München (DE)**

(56) References cited:
**WO-A-00/26274**
**WO-A-00/26275**
**US-A- 4 414 230**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 969 059 B1

## Description

BACKGROUND OF THE INVENTION

This disclosure relates to stabilized thermoplastic compositions, methods of manufacture, and articles and uses thereof.

Polycarbonates may be blended with other different, miscible or immiscible polymers, to improve various mechanical or other properties of the polycarbonate. For applications requiring improved mechanical properties, miscible blends are useful, as they also allow use of the blends for applications requiring transparency. Specifically, polyesters may be blended with polycarbonates for improved mechanical properties, such as, for example, impact strength, and/or may also be added to improve rheological properties such as melt volume rate. However, other properties of polycarbonates, specifically optical properties, may be adversely affected by forming a blend, where the polycarbonate can form a hazy appearance and diminished light transmittance.

There accordingly remains a need in the art for miscible thermoplastic compositions comprising polycarbonate and polyester. The thermoplastic composition has high transparency and low haze, and has the desired mechanical and/or rheological properties.

SUMMARY OF THE INVENTION

The above deficiencies in the art are alleviated by, in an embodiment, a thermoplastic composition comprising a polyester-polycarbonate polymer comprising isophthalate-terephthalate-resorcinol ester units and carbonate units, and a poly(alkylene ester) comprising ethylene terephthalate units, 1,4-cyclohexyldimethylene terephthalate units, or a combination of ethylene terephthalate units and 1,4-cyclohexyldimethylene terephthalate units, wherein the sum of the mole percentage values of isophthalate-terephthalate-resorcinol ester units in the polyester-polycarbonate polymer, and of the mole percentage values of 1,4-cyclohexanedimethylene terephthalate units in the poly(alkylene ester) polymer, is a value greater than 40. In a specific embodiment, the polyester-polycarbonate and poly(alkylene ester) polymer are present in the thermoplastic composition in a weight ratio of 20:80 to 80:20.

In another embodiment, a thermoplastic composition comprises a polyester-polycarbonate polymer consisting essentially of isophthalate-terephthalate-resorcinol ester units and carbonate units, and a poly(alkylene ester) consisting essentially of ethylene terephthalate units, 1,4-cyclohexyldimethylene terephthalate units, or a combination of ethylene terephthalate units and 1,4-cyclohexyldimethylene terephthalate units, wherein the mole percentage of isophthalate-terephthalate-resorcinol ester units in the polyester-polycarbonate is greater than or equal to 1 mole percent of the total number of moles of ester and polycarbonate units, wherein the polyester-polycarbonate and poly(alkylene terephthalate) are present in a weight ratio of 20:80 to 80:20, and wherein the sum of the mole percentage of isophthalate-terephthalate-resorcinol ester units in the polyester-polycarbonate polymer, and of the mole percentage of 1,4-cyclohexanedimethylene terephthalate units in the poly(alkylene ester) polymer, is a value greater than 40.

In another embodiment, a method of forming a thermoplastic composition comprises melt combining a polyester-polycarbonate comprising isophthalate-terephthalate-resorcinol ester units and carbonate units, and a poly(alkylene ester) comprising ethylene terephthalate units, 1,4-cyclohexyldimethylene terephthalate units, or a combination of ethylene terephthalate units and 1,4-cyclohexyldimethylene terephthalate units, wherein the polyester-polycarbonate and polyalkylene ester are selected such that the sum of the mole percentage of isophthalate-terephthalate-resorcinol ester units in the polyester-polycarbonate polymer, and of the mole percentage of 1,4-cyclohexanedimethylene terephthalate units in the poly(alkylene terephthalate) polymer, is a value greater than 40.

In another embodiment, a thermoplastic composition consists essentially of a polyester-polycarbonate polymer comprising isophthalate-terephthalate-resorcinol ester units and carbonate units, and a poly(alkylene ester) comprising ethylene terephthalate units, 1,4-cyclohexyldimethylene terephthalate units, or a combination of ethylene terephthalate units and 1,4-cyclohexyldimethylene terephthalate units,
wherein the sum of the mole percentage values of isophthalate-terephthalate-resorcinol ester units in the polyester-polycarbonate polymer, and of the mole percentage values of 1,4-cyclohexanedimethylene terephthalate units in the poly(alkylene ester) polymer, is a value greater than 40.

In another embodiment, a thermoplastic composition consists of a polyester-polycarbonate polymer comprising isophthalate-terephthalate-resorcinol ester units and carbonate units, and a poly(alkylene ester) comprising ethylene terephthalate units, 1,4-cyclohexyldimethylene terephthalate units, or a combination of ethylene terephthalate units and 1,4-cyclohexyldimethylene terephthalate units, and 0 to 5 percent by weight of an additive, wherein the sum of the mole percentage values of isophthalate-terephthalate-resorcinol ester units in the polyester-polycarbonate polymer, and of the mole percentage values of 1,4-cyclohexanedimethylene terephthalate units in the poly(alkylene ester) polymer, is a value greater than 40, and
wherein the amounts and types of the additives are selected such that the desired properties of the thermoplastic

composition are not significantly adversely affected.

In another embodiment, an article comprising the thermoplastic composition is disclosed.

The above described and other features are exemplified by the following detailed description.

DETAILED DESCRIPTION OF THE INVENTION

Surprisingly, it has been found that a thermoplastic composition comprising a blend of polyester-polycarbonate polymer having isophthalate-terephthalate-resorcinol ester units (ITR) and carbonate units, and a poly(alkylene ester) polymer comprising ethylene terephthalate units and/or 1,4-cyclohexyldimethylene terephthalate ester units (CHDM), has high transparency. The blend of these polymers is transparent when the sum of the mole percentage values of ITR ester units in the polyester-polycarbonate polymer, and of the mole percentage values of CHDM units in the poly(alkylene ester) polymer, is a value greater than 40. In addition to transparency and desirable mechanical properties, the composition desirably has excellent weatherability.

As used herein, the term "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkylene" refers to a non-aromatic alicyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to a an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups may be unsubstituted or substituted, provided that the substitution does not significantly adversely affect synthesis, stability, or use of the compound. The term "substituted" as used herein means that any one or more hydrogens on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound.

The thermoplastic composition comprises a copolymer comprising a polycarbonate. As used herein, the terms "polycarbonate" and "polycarbonate resin" means compositions having repeating structural carbonate units of the formula (1):

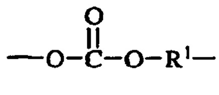

(1)

in which at least 60 percent of the total number of $R^1$ groups are aromatic organic radicals and the balance thereof are aliphatic, alicyclic, or aromatic radicals. In one embodiment, each $R^1$ is an aromatic organic radical. In another embodiment, each $R^1$ is a radical of the formula (2):

$$—A^1—Y^1—A^2— \qquad (2)$$

wherein each of $A^1$ and $A^2$ is a monocyclic divalent aryl radical and $Y^1$ is a bridging radical having one or two atoms that separate $A^1$ from $A^2$. In an exemplary embodiment, one atom separates $A^1$ from $A^2$. Illustrative non-limiting examples of radicals of this type are -O-, -S-, -S(O)-, $-S(O_2)-$, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene,

cyclohexylidene, or isopropylidene. In another embodiment, $Y^1$ is a carbon-carbon bond (-) connecting $A^1$ and $A^2$.

Polycarbonates may be produced by the interfacial reaction of dihydroxy compounds having the formula $HO-R^1-OH$, which includes dihydroxy aromatic compounds of formula (3):

$$HO-A^1-Y^1-A^2-OH \qquad (3)$$

wherein $Y^1$, $A^1$ and $A^2$ are as described above. Also included are bisphenol compounds of general formula (4):

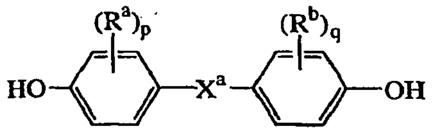

(4)

wherein $R^a$ and $R^b$ each represent a halogen atom or a monovalent hydrocarbon group and may be the same or different; p and q are each independently integers of 0 to 4; and $X^a$ represents one of the groups of formula (5):

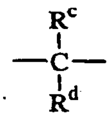

or

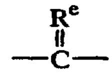

(5)

wherein $R^c$ and $R^d$ each independently represent a hydrogen atom or a monovalent linear alkyl or cyclic alkylene group and $R^e$ is a divalent hydrocarbon group. In an embodiment, $R^c$ and $R^d$ represent a cyclic alkylene group; or heteroatom-containing cyclic alkylene group comprising carbon atoms, heteroatoms with a valency of two or greater, or a combination comprising at least one heteroatom and at least two carbon atoms. Suitable heteroatoms for use in the heteroatom-containing cyclic alkylene group include -O-, -S-, and -N(Z)-, where Z is a substituent group selected from hydrogen, hydroxy, $C_{1-12}$ alkyl, $C_{1-12}$ alkoxy, or $C_{1-12}$ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

Suitable polycarbonates further include those derived from bisphenols containing alkyl cyclohexane units. Such polycarbonates have structural units corresponding to the formula (6):

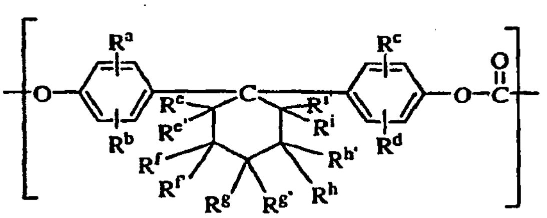

(6)

wherein $R^a$-$R^d$ are each independently hydrogen, $C_{1-12}$ alkyl, or halogen; and substituents $R_e$-$R_i$ and $R_e$-$R_i$ are each independently hydrogen or $C_{1-12}$ alkyl. The substituents may be aliphatic or aromatic, straight-chain, cyclic, bicyclic, branched, saturated, or unsaturated. In a specific embodiment, alkyl cyclohexane-containing bisphenols, for example the reaction product of two moles of a phenol with one mole of a hydrogenated isophorone, are useful for making polycarbonate polymers with high glass transition temperatures and high heat distortion temperatures. Such isophorone bisphenol-containing polycarbonates correspond to formula (6), wherein each of $R_f$, $R_{f'}$, and $R_h$ are methyl groups; $R_e$, $R_{e'}$, Rg, $R_{g'}$, $R_{h'}$, $R_i$, and $R_{i'}$ are each hydrogen; and $R_a$-$R_d$ are as defined above. These isophorone bisphenol based polymers, including polycarbonate copolymers made containing non-alkyl cyclohexane bisphenols and blends of alkyl

cyclohexyl bisphenol containing polycarbonates with non-alkyl cyclohexyl bisphenol polycarbonates, are supplied by Bayer Co. under the APEC® trade name.

Some illustrative, non-limiting examples of suitable dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl) diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis (4-hydroxy-3-bromophenyl)propane, 1,1-bis (hydroxyphenyl)cyclopentane, 1,1-bis(4-hydroxyphenyl)cyclohexane, 1,1-bis(4-hydroxy-3 methyl phenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis (3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy compounds.

Specific examples of the types of bisphenol compounds represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis (4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl)phthalimidine, 2-phenyl-3,3-bis(4-hydroxyphenyl)phthalimidine (PPPBP), and 1,1-bis(4-hydroxy-3-methylphenyl)cyclohexane (DMBPC). Combinations comprising at least one of the foregoing dihydroxy compounds may also be used.

Another dihydroxy aromatic group $R^1$ is derived from a dihydroxy aromatic compound of formula (7):

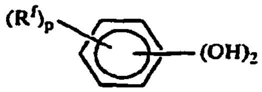

(7)

wherein each $R^f$ is independently a halogen atom, a $C_{1-12}$ hydrocarbon group, or a $C_{1-12}$ halogen substituted hydrocarbon group, and p is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

"Polycarbonates" and "polycarbonate resins" as used herein further include homopolycarbonates, copolymers comprising different $R^1$ moieties in the carbonate (referred to herein as "copolycarbonates"), copolymers comprising carbonate units and other types of polymer units, such as ester units, and combinations comprising one or more of homopolycarbonates and copolycarbonates. As used herein, "combination" is inclusive of blends, mixtures, alloys, reaction products, and the like.

In a specific embodiment, where used, the polycarbonate can be a linear homopolymer derived from bisphenol A, in which each of $A^1$ and $A^2$ is p-phenylene and $Y^1$ is isopropylidene. The polycarbonates may have an intrinsic viscosity, as determined in chloroform at 25°C, of 0.3 to 1.5 deciliters per gram (dl/g), specifically 0.45 to 1.0 dl/g. The polycarbonates may have a weight average molecular weight (Mw) of 10,000 to 100,000, as measured by gel permeation chromatography (GPC) using a crosslinked styrene-divinyl benzene column, at a sample concentration of 1 milligram per milliliter, and as calibrated with polycarbonate standards.

In an embodiment, the polycarbonate has flow properties suitable for the manufacture of thin articles. Melt volume flow rate (often abbreviated MVR) measures the rate of extrusion of a thermoplastics through an orifice at a

prescribed temperature and load. Polycarbonates suitable for the formation of thin articles may have an MVR, measured at 300°C/1.2 kg according to ASTM D1238-04, of 0.5 to 80 cubic centimeters per 10 minutes (cc/10 min). In a specific embodiment, a suitable polycarbonate composition has an MVR measured at 300°C/1.2 kg according to ASTM D1238-04, of 0.5 to 50 cc/10 min, specifically 0.5 to 25 cc/10 min, and more specifically 1 to 15 cc/10 min. Mixtures of polycarbonates of different flow properties may be used to achieve the overall desired flow property.

The polycarbonate may have a light transmittance greater than or equal to 55%, specifically greater than or equal to 60% and more specifically greater than or equal to 70%, as measured at 2.5 millimeters thickness according to ASTM D 1003-00. The polycarbonate may also have a haze less than or equal to 50%, specifically less than or equal to 40%, and most specifically less than or equal to 30%, as measured at 2.5 millimeters thickness according to ASTM D1003-00.

The thermoplastic composition comprises a polyester-polycarbonate, also known as polyester carbonate, copolyester-polycarbonate, and copolyestercarbonate. Such copolymers further contain, in addition to recurring carbonate chain units of the formula (1), repeating units of formula (8):

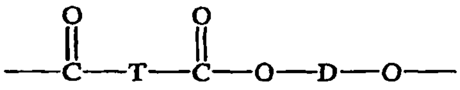

(8)

wherein D is a divalent radical derived from a dihydroxy compound, and may be, for example, a $C_{2-10}$ alkylene radical, a $C_{6-30}$ alicyclic radical, a $C_{6-30}$ aromatic radical or a polyoxyalkylene radical in which the alkylene groups contain 2 to 6 carbon atoms, specifically 2, 3, or 4 carbon atoms; and T divalent radical derived from a dicarboxylic acid, and may be, for example, a $C_{2-10}$ alkylene radical, a $C_{6-30}$ alicyclic radical, a $C_{6-30}$ alkyl aromatic radical, or a $C_{6-30}$ aromatic radical.

In one embodiment, D is a $C_{2-6}$ alkylene radical. In another embodiment, D is derived from an aromatic dihydroxy compound of formula (4) above. In another embodiment, D is derived from an aromatic dihydroxy compound of formula (7) above.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of isophthalic acid to terephthalic acid is 91:1 to 2:98. In another specific embodiment, D is a $C_{2-6}$ alkylene radical and T is p-phenylene, m-phenylene, naphthalene, a divalent cycloaliphatic radical, or a mixture thereof.

In an embodiment, the polyarylates comprise resorcinol arylate polyesters as illustrated in formula (9):

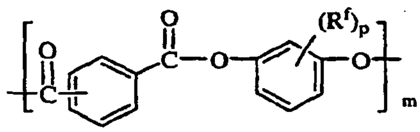

-(9)

wherein $R^f$ and p are previously defined for formula (7), and m is greater than or equal to 1. Where p is 0, $R^f$ is hydrogen. In an embodiment, m is 2 to 500. In another embodiment, the molar ratio of isophthalate to terephthalate can be about 0.25:1 to about 4.0:1.

In an embodiment, useful aromatic polyester blocks may include, for example, poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination comprising at least one of these. Also contemplated are aromatic polyesters with a minor amount, e.g., from about 0.5 to about 10 percent by weight, of units derived from an aliphatic diacid and/or an aliphatic polyol to make co-polyesters.

In addition to the ester units, the polyester-polycarbonates comprise carbonate units as described in formula (1), above. In an embodiment, carbonate units of formula (1) may be derived from aromatic dihydroxy compounds of formula (7), formula (4), formula (7), or a combination comprising at least one of the foregoing dihydroxy compounds. In an embodiment, specific carbonate units are derived from bisphenol A carbonate and/or resorcinol carbonate units.

Thus, in an embodiment, the polyester-polycarbonates have the structure shown in formula (10):

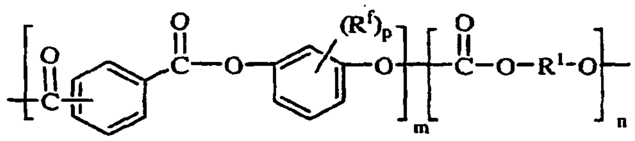

(10)

wherein $R^f$ , p, and m are as defined in formula (9), each $R^1$ is independently a $C_{6-30}$ arylene group, and n is greater than or equal to one. In an embodiment, m is 2 to 500, and n is 2 to 500. In a specific embodiment, m is 3 to 300, and n is 3 to 300.

Specifically, the polyester unit of a polyester-polycarbonate can be derived from the reaction of a combination of isophthalic and terephthalic diacids (or derivatives thereof) with resorcinol, bisphenol A, or a combination comprising at least one of these, wherein the molar ratio of isophthalate units to terephthalate units is 91:9 to 2:98, specifically 85: 15 to 3:97, more specifically 80:20 to 5:95, and still more specifically 70:30 to 10:90. The polycarbonate units can be derived from resorcinol and/or bisphenol A, in a molar ratio of resorcinol carbonate units to bisphenol A carbonate units of 0:100 to 99:1. In an embodiment, the polyester-polycarbonate polymer comprises isophthalate-terephthalate-resorcinol (ITR) ester units. As used herein, isophthalate-terephthalate-resorcinol ester units comprise a combination isophthalate esters, terephthalate esters, and resorcinol esters. In a specific embodiment, isophthalate-terephthalate-resorcinol ester units comprise a combination of isophthalate-resorcinol ester units and terephthalate-resorcinol ester units. The ratio of ITR ester units to the carbonate units in the polyester-polycarbonate is 1:99 to 99:1, specifically 5:95 to 95: 5, more specifically 10:90 to 90:10, still more specifically 20:80 to 80:20. In a specific embodiment, the polyester-polycarbonate is a poly(isophthalate-terephthalate-resorcinol ester)-co-(bisphenol-A carbonate) polymer.

While it is contemplated that other resins may be used in the thermoplastic compositions described herein, the polyester-polycarbonate polymers having ITR ester units and carbonate units are particularly suited for use in thermoplastic compositions herein. Thus, in another embodiment, copolymers of polyester-polycarbonate consist of isophthalate-terephthalate-resorcinol ester units and carbonate units.

The polyester-polycarbonates may have a weight-averaged molecular weight (Mw) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to BPA-polycarbonate references. Samples are prepared at a concentration of about 1 mg/ml, and are eluted at a flow rate of about 1.0 ml/min.

Suitable polycarbonates or polycarbonate blocks in copolymers can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., 8 to 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used. A chain stopper (also referred to as a capping agent) may be included during polymerization. The chain-stopper limits molecular weight growth rate, and so controls molecular weight in the polycarbonate. A chain-stopper may be at least one of mono-phenolic compounds, mono-carboxylic acid chlorides, and/or mono-chloroformates. Where a chain stopper is incorporated with the polycarbonate, the chain stopper may also be referred to as an end group.

For example, mono-phenolic compounds suitable as chain stoppers include monocyclic phenols, such as phenol, $C_1$-$C_{22}$ alkyl-substituted phenols, p-cumylphenol, p-tertiary-butyl phenol, hydroxy diphenyl; monoethers of diphenols, such as p-methoxyphenol. Alkyl-substituted phenols include those with branched chain alkyl substituents having 8 to 9 carbon atoms. A mono-phenolic UV absorber may be used as capping agent. Such compounds include 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like. Specifically, mono-phenolic chain-stoppers include phenol, p-cumylphenol, and/or resorcinol monobenzoate.

Mono-carboxylic acid chlorides may also be suitable as chain stoppers. These include monocyclic, monocarboxylic acid chlorides such as benzoyl chloride, $C_1$-$C_{22}$ alkyl-substituted benzoyl chloride, 4-methylbenzoyl chloride, halogen-substituted benzoyl chloride, bromobenzoyl chloride, cinnamoyl chloride, 4-nadimidobenzoyl chloride, and mixtures thereof; polycyclic, mono-carboxylic acid chlorides such as trimellitic anhydride chloride, and naphthoyl chloride; and mixtures of monocyclic and polycyclic mono-carboxylic acid chlorides. Chlorides of aliphatic monocarboxylic acids with up to 22 carbon atoms are suitable. Functionalized chlorides of aliphatic monocarboxylic acids, such as acryloyl chloride and methacryoyl chloride, are also suitable. Also suitable are mono-chloroformates including monocyclic, mono-chloroformates, such as phenyl chloroformate, alkyl-substituted phenyl chloroformate, p-cumyl phenyl chloroformate, toluene chloroformate, and mixtures thereof.

Among the phase transfer catalysts that may be used in interfacial polymerization are catalysts of the formula $(R^3)_4Q^+X$, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Suitable phase transfer catalysts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. In an embodiment, a specifically useful phase transfer catalyst is $CH_3[CH_3(CH_2)_3]_3NCl$ (methyl tri-n-butyl ammonium chloride). An effective amount of a phase transfer catalyst may be 0.1 to 10 wt% based on the weight of bisphenol in the phosgenation mixture. In another embodiment an effective amount of phase transfer catalyst may be 0.5 to 2 wt% based on the weight of dihydroxy compound in the phosgenation mixture.

Alternatively, melt processes may be used to make polycarbonates or polycarbonate blocks. Generally, in the melt polymerization process, polycarbonates may be prepared by co-reacting, in a molten state, the dihydroxy reactant (s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue. A specifically useful melt process for making polycarbonates uses, a diaryl carbonate ester having electron withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate (BMSC), bis(4-methylcarboxylphenyl) carbonate, bis(2-acetylphenyl) carboxylate, bis(4-acetylphenyl) carboxylate, or a combination comprising at least one of these. In addition, suitable transesterification catalyst for use may include phase transfer catalysts of formula $(R^3)_4Q^+X$ above, wherein each $R^3$, Q, and X are as defined above. Examples of suitable transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of these.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt% of the polycarbonate. All types of polycarbonate end groups are contemplated as being useful in the polycarbonate, provided that such end groups do not significantly affect desired properties of the thermoplastic compositions.

In addition to the polyester-polycarbonate polymers described above, the thermoplastic composition also comprises a polyester. Suitable polyesters include those polyesters having repeating units of formula (8). Useful polyesters may include aromatic polyesters, poly(alkylene esters) including poly(alkylene arylates), and poly(cycloalkylene diesters). Aromatic polyesters may have a polyester structure according to formula (8), wherein D and T are each aromatic groups as described hereinabove.

In an embodiment, the thermoplastic composition comprises poly(alkylene esters). Poly(alkylene esters) have a polyester structure according to formula (8), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Thus, in formula (8), where T is 1,4-phenylene, the poly(alkylene ester) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene.

Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly (ethylene naphthanoate) (PEN), and poly(butylene naphthanoate) (PBN). A specifically suitable poly(cycloalkylene diester) is poly(cyclohexanedimethanol terephthalate) (PCT). Combinations comprising at least one of the foregoing polyesters may also be used.

Copolymers comprising alkylene terephthalate repeating ester units with other suitable ester groups are useful. Specifically useful ester units include different alkylene terephthalate units, which can be present in the polymer chain

as individual units, or as blocks of poly(alkylene terephthalates). In an embodiment, copolymers of alkylene terephthalate ester units comprise ethylene terephthalate units of formula 8, wherein T is a 1,4-phenylene group and D is ethylene; and 1,4-cyclohexanedimethylene terephthalate (ET) ester units of formula (8), wherein T is a 1,4-phenylene group and D is a 1,4-cyclohexanedimethylene (CHDM) ester group. A copolymer comprising the ET ester units and CHDM ester units may have these units present in a molar ratio of 1:99 to 99:1, specifically 5:95 to 95:5, more specifically 10:90 to 90:10, and still more specifically 20:80 to 80:20. It is also contemplated that further additional alkylene ester units may be present in the alkylene terephthalate.

While it is contemplated that other resins may be used in the thermoplastic compositions described herein, the poly(alkylene terephthalate) polymers having ET ester units and CHDM ester units are particularly suited for use in thermoplastic compositions herein. Thus, in another embodiment, copolymers of alkylene terephthalate ester units consist essentially of ethylene terephthalate units of formula 8, wherein T is a 1,4-phenylene group and D is ethylene; and 1,4-cyclohexanedimethylene terephthalate (ET) ester units of formula (8), wherein T is a 1,4-phenylene group and D is a 1,4-cyclohexanedimethylene (CHDM) ester group. In other embodiment, it is contemplated that the poly(alkylene terephthalate) polymers may also include alkylene isophthalate units, wherein the molar ratio of alkylene isophthalate units to alkylene terephthalate units is 99:1 to 1:99. A copolymer consisting of the ET ester units and CHDM ester units may have these units present in a molar ratio of 1:99 to 99:1, specifically 5:95 to 95:5, more specifically 10:90 to 90: 10, and still more specifically 20:80 to 80:20.

Specifically suitable examples of such copolymers include poly(ethylene terephthalate)-co-(1,4-cyclohexanedimethylene terephthalate), abbreviated as PETG where the polymer comprises greater than or equal to 50 mol% of ethylene terephthalate ester units, and abbreviated as PCTG where the polymer comprises greater than 50 mol% of 1,4-cyclohexanedimethylene terephthalate ester units.

The polyesters may be obtained by interfacial polymerization or melt-process condensation as described above, by solution phase condensation, or by transesterification polymerization wherein, for example, a dialkyl ester such as dimethyl terephthalate may be transesterified with ethylene glycol using acid catalysis, to generate poly(ethylene terephthalate). It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition. The polyesters described herein are generally completely miscible with the polycarbonates when blended. Cycloaliphatic polyesters are generally prepared by reaction of a diol with a dibasic acid or derivative.

The diols useful in the preparation of the polyester polymers are straight chain, branched, or cycloaliphatic, and may contain from 2 to 12 carbon atoms. Examples of suitable diols include ethylene glycol; propylene glycols such as 1,2- and 1,3-propylene glycol; butane diols such as 1,3- and 1,4-butane diol; diethylene glycol; 2,2-dimethyl-1,3-propane diol; 2-ethyl- and 2-methyl-1,3-propane diol; 1,3- and 1,5-pentane diol; dipropylene glycol; 2-methyl-1,5-pentane diol; 1,6-hexane diol; 1,4-cyclohexane dimethanol and particularly its cis- and trans-isomers; triethylene glycol; 1,10-decane diol, and combinations comprising at least one of the foregoing diols. Specifically useful is dimethanol bicyclo octane, dimethanol decalin, a cycloaliphatic diol or chemical equivalents thereof, and particularly 1,4-cyclohexane dimethanol or its chemical equivalents. If 1,4-cyclohexane dimethanol is to be used as the diol component, a mixture of cis- to trans-isomers in ratios of about 1:4 to about 4:1 can be used. Specifically, a ratio of cis- to trans- isomers of about 1:3 can be useful.

The diacids useful in the preparation of the cycloaliphatic polyester polymers are aliphatic diacids that include carboxylic acids having two carboxyl groups each of which are attached to a saturated carbon in a saturated ring. Suitable examples of cycloaliphatic acids include decahydro naphthalene dicarboxylic acid, norbornene dicarboxylic acids, bicyclo octane dicarboxylic acids. Specifically useful cycloaliphatic diacids include 1,4-cyclohexanedicarboxylic acid and trans-1, 4-cyclohexanedicarboxylic acids. Linear aliphatic diacids are also useful provided the polyester has at least one monomer containing a cycloaliphatic ring. Illustrative examples of linear aliphatic diacids are succinic acid, adipic acid, dimethyl succinic acid, and azelaic acid. Mixtures of diacid and diols may also be used to make the cycloaliphatic polyesters.

Cyclohexanedicarboxylic acids and their chemical equivalents can be prepared, for example, by the hydrogenation of cycloaromatic diacids and corresponding derivatives such as isophthalic acid, terephthalic acid or naphthalenic acid in a suitable solvent (e.g., water or acetic acid) at room temperature and at atmospheric pressure using catalysts such as rhodium supported on a carrier comprising carbon and alumina. They may also be prepared by the use of an inert liquid medium wherein an acid is at least partially soluble under reaction conditions and a catalyst of palladium or ruthenium in carbon or silica is used.

Generally, during hydrogenation, two or more isomers are obtained in which the carboxylic acid groups are in cis- or trans-positions. The cis- and trans-isomers can be separated by crystallization with or without a solvent, for example, n-heptane, or by distillation. The cis-isomer tends to be more miscible, however, the trans-isomer has higher melting and crystallization temperatures and is specifically suitable. Mixtures of the cis- and trans-isomers may also be

used. The weight ratio of trans- to cis-isomer can be about 75:25. When a mixture of isomers or more than one diacid is used, a copolyester or a mixture of two polyesters may be used as the cycloaliphatic polyester polymer.

The polyester-polycarbonate and poly(alkylene ester) blend desirably has a melt volume rate of about 5 to about 150 cc/10 min., specifically about 7 to about 125 cc/10 min, more specifically about 9 to about 110 cc/10 min, and still more specifically about 10 to about 100 cc/10 min., measured at 300°C and a load of 1.2 kilograms according to ASTM D1238-04.

Thus, in an embodiment, the thermoplastic composition comprises a polyester-polycarbonate polymer comprising isophthalate-terephthalate-resorcinol units and carbonate units, and a poly(alkylene ester), wherein the weight ratio of polyester-polycarbonate and poly(alkylene ester) is 20:80 to 80:20, specifically 25:75 to 75:25, and more specifically 30:70 to 70:30.

It has been observed that polycarbonates, when blended with poly(ethylene terephthalate) polymers with 80 mol% CHDM ester units and 20 mol% ethylene terephthalate ester units (i.e., a PCTG polymer), and with 100 mol% CHDM (i.e., PCT polymer), form transparent blends, having a light transmission of greater than or equal to 80%, and a haze of less than 5%. However, as the mole percentage of CHDM is decreased in the PCTG polymer, blends of polycarbonates become opaque. Polyester-polycarbonates having 40 mol% ITR ester units of the total number of ITR ester and carbonate units have been observed to form transparent blends when blended with poly(ethylene terephthalate) (0 mol% CHDM). However, blends of polyester-polycarbonates containing ITR ester units have been found to form immiscible blends with PET or PETG copolymers having of CHDM ester units when the sum of the mole percentage values of ITR ester units in the polyester-polycarbonate polymer, and of the mole percentage values of any CHDM units that may be present in the poly(alkylene ester) polymer, is a value less than 40.

While it is not required to provide an explanation of how an invention works, such theories may be useful for the purposes of better helping the reader to comprehend the invention. It is therefore to be understood that the claims are not to be limited by the following theory of operation. It is believed that on a molecular scale both the transparency and haze of the polyester-polycarbonate are related to the number of polyester blocks within the polymer chain, the average size of the polyester blocks (i.e., continuous runs of a number of repeating ester units), the random or non-random distribution of the polyester blocks in the polymer chain, or a combination of one or more of these factors. It is believed that a more random distribution of polyester blocks within a copolymer contributes to a greater degree of transparency and a lesser degree of haze. It is believed that the low transparency, i.e., high haze and low light transmittance, is observed when the polyester blocks within a blended polymer form crystalline domains which have a different refractive index than the surrounding polymer matrix. Domains of sufficient size (20 nm and larger) can form. These domains serve to scatter incident light, and may be observable as haze by both the naked eye and/or using spectroscopic methods, the latter of which may be used to characterize the crystalline domains and quantify the amount of haze. In the present disclosure it is also found that polyestercarbonate containing from a range of 20 mol% ITR to 80 mol% ITR give transparent blends with poly(ethylene terephthalate) copolymers.

Surprisingly, it has been found that a thermoplastic composition comprising a blend of polyester-polycarbonate polymer having isophthalate-terephthalate-resorcinol ester units (ITR) and carbonate units, and a poly(alkylene ester) polymer comprising ethylene terephthalate units and/or 1,4-cyclohexyldimethylene terephthalate ester units (CHDM), has high transparency. The blend of these polymers is transparent when the sum of the mole percentage of isophthalate-terephthalate-resorcinol ester units in the polyester-polycarbonate polymer, and of the mole percentage of 1,4-cyclohexanedimethylene terephthalate units in the poly(alkylene ester) polymer, is a value greater than 40. In an exemplary embodiment, a polyester-polycarbonate polymer with 20 mol% of ITR ester unit is miscible with a PETG copolymer comprising 70 mol% ET ester units and 30 mol% CHDM ester units, over the entire compositional range (i.e., a weight ratio of poly(ITR-ester)-polycarbonate to PETG of 1:99 to 99:1). By contrast, a polycarbonate having only bisphenol-A carbonate units provides opaque blends. Thus, increasing the ITR ester content of the polyester-polycarbonate can improve transparency of the blended composition. Advantageously, use of a polyester-polycarbonate polymer provides resistance to weathering by the Photo-Fries photolysis of the polymer, and thus provides, in addition to transparency, a combination of improved mechanical performance and weatherability for the thermoplastic composition.

Poly(ethylene terephthalate) polymer may undergo relatively rapid formation of crystalline domains, whereas poly(1,4-cyclohexyldimethylene terephthalate) can have a significantly slower crystallization rate and thus provides a more amorphous structure. Thus, it is believed that the use of poly(alkylene ester)s comprising CHDM ester units may reduce the size and number of crystalline domains by the relatively slow kinetics of formation of the crystalline domains when compared with the PET homopolymer. Increasing the content of CHDM ester units in the poly(alkylene terephthalate) provides a corresponding decrease in favorability for formation of these domains, thereby providing a poly (alkylene ester) polymer with increasingly amorphous characteristics, and hence better miscibility and higher transparency. However, as the CHDM content is increased to very high levels (e.g., 70 mol% or greater), the tendency of the polymer to crystallize may actually increase, and the processing operating window for such blends may therefore become narrowed.

In an embodiment, the thermoplastic composition comprises polyester-polycarbonates comprising isophthalate-terephthalate-resorcinol (ITR) ester units, and poly(alkylene ester)s comprising ethylene terephthalate units, 1,4-cyclohexylenedimethylene units, or a combination comprising ethylene terephthalate units and 1,4-cyclohexylenedimethylene units. The composition is a blend of these polymers wherein the sum of the mole percentage of isophthalate-terephthalate-resorcinol ester units in the polyester-polycarbonate polymer, and of the mole percentage of 1,4-cyclohexanedimethylene terephthalate units in the poly(alkylene ester) polymer, is a value greater than 40, specifically greater than or equal to 45, more specifically greater than or equal to 50, and still more specifically greater than or equal to 55. Further, the thermoplastic composition comprising the polyester-polycarbonate and poly(alkylene ester) is a blend of these polymers wherein the sum of the mole percentage of isophthalate-terephthalate-resorcinol ester units in the polyester-polycarbonate polymer, and of the mole percentage of 1,4-cyclohexanedimethylene terephthalate units in the poly(alkylene ester) polymer, is a value less than 200, specifically less than or equal to 195, more specifically less than or equal to 190, and still more specifically less than or equal to 180. In another embodiment, the thermoplastic composition consists essentially of the polyester-polycarbonates comprising isophthalate-terephthalate-resorcinol (ITR) ester units, and poly(alkylene ester)s comprising ethylene terephthalate units, 1,4-cyclohexylenedimethylene units, or a combination comprising ethylene terephthalate units and 1,4-cyclohexylenedimethylene units.

The thermoplastic composition from which the article for testing is molded can contain additives typically included with polycarbonate containing compositions, such as mold release agents and antioxidants, wherein the presence of these additives in an amount effective to perform the intended function does not significantly adversely affect the desired properties of the thermoplastic composition. Typically the total amount of these additives is less than or equal to 5.0 percent by weight of the total weight of components present in thermoplastic composition. In an exemplary embodiment, suitable additives present in the thermoplastic composition used to prepare a molded article for transmittance and haze testing may include a mold release agent, and an antioxidant. In a specific embodiment, the mold release agent is pentaerythritol tetrastearate, and the antioxidant is 2,6-di-*tert*-butylphenyl)phosphite.

Thus, in an embodiment, a molded article having a thickness of 2.5 millimeters and consisting of the polyester-polycarbonate, the poly(alkylene ester), and an effective amount of each of a mold-release agent, and an antioxidant, has a transmittance of greater than or equal to 80, specifically greater than or equal to 85, more specifically greater than or equal to 87, and more specifically greater than or equal to 90, when measured according to ASTM D1003-00. In an embodiment, the article is prepared by injection molding.

In another embodiment, a molded article having a thickness of 2.5 millimeters and consisting of the polyester-polycarbonate, the poly(alkylene ester), and an effective amount of each of a mold-release agent, and an antioxidant, has a haze of less than or equal to 10, specifically less than or equal to 5, and more specifically less than or equal to 4, and still more specifically less than or equal to 3, when measured according to ASTM D1003-00.

In addition to the polyester-polycarbonate and poly(alkylene terephthalate) polymer, the thermoplastic composition may include various other additives ordinarily incorporated with thermoplastic compositions of this type, with the proviso that the additives are selected so as not to significantly adversely affect the desired properties of the thermoplastic composition. Mixtures of additives may be used. Such additives may be mixed at a suitable time during the mixing of the components for forming the thermoplastic composition.

The thermoplastic composition may comprise a colorant such as a pigment and/or dye additive. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Blue 15:4, Pigment Blue 28, Pigment Green 7, Pigment Yellow 147 and Pigment Yellow 150, or combinations comprising at least one of the foregoing pigments. Pigments can be used in amounts of 0.01 to 10 percent by weight, based on the total weight of the polyester-polycarbonate and poly(alkylene ester), where the use of the pigment does not significantly adversely affect the desired properties of the thermoplastic composition.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3'''',5''''-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Dyes can be used in amounts of 0.01 to 10 percent by weight, based on the total weight of the polyester-polycarbonate and poly(alkylene ester), where the use of the dyes does not significantly adversely affect the desired properties of the thermoplastic composition.

The thermoplastic composition may further comprise an antioxidant. Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of paracresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl) propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants can be used in amounts of 0.0001 to 1 percent by weight, based on the total weight of the polyester-polycarbonate and poly(alkylene ester).

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 percent by weight, based on the total weight of the polyester-polycarbonate and poly(alkylene ester).

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers can be used in amounts of 0.0001 to 1 percent by weight, based on the total weight of the polyester-polycarbonate and poly(alkylene ester).

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB® 5411); 2-hydroxy-4-n-octyloxybenzophenone (CYASORB® 531); 2-[4,6-bis(2,4-dimethylphenyl)-1,3,5-triazin-2-yl]- 5-(octyloxy)-phenol (CYASORB® 1164); 2,2'-(1,4- phenylene)bis(4H-3,1-benzoxazin-4-one) (CYASORB® UV- 3638); 1,3-bis[(2-cyano-3,3-diphenylacryloyl)oxy]-2,2-bis[[(2-cyano-3, 3-diphenylacryloyl)oxy]methyl]propane (UVINUL® 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl] propane; nano-size inorganic materials such as titanium oxide, cerium oxide, and zinc oxide, all with particle size less than 100 nanometers; or the like, or combinations comprising at least one of the foregoing UV absorbers. UV absorbers can be used in amounts of 0.0001 to 1 percent by weight, based on the total weight of the polyester-polycarbonate and poly(alkylene ester).

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 percent by weight, specifically 0.01 to 0.75 percent by weight, more specifically 0.1 to 0.5 percent by weight, based on the total weight of the polyester-polycarbonate and poly(alkylene ester).

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat® 6321 (Sanyo) or Pebax® MH1657 (Atofina), Irgastat® P18 and P22 (Ciba-Geigy). Other polymeric materials that may be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative. Antistatic agents can be used in amounts of 0.0001 to 5 percent by weight, based on the total weight of the polyester-polycarbonate and poly(alkylene ester).

Suitable flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula $(GO)_3P=O$, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis (neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below:

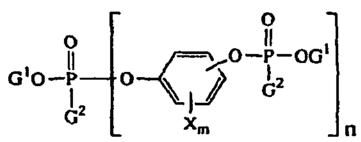

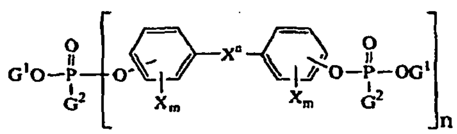

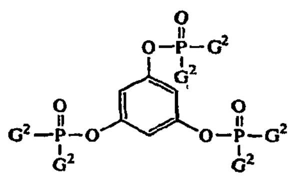

wherein each $G^1$ is independently a hydrocarbon having 1 to 30 carbon atoms; each $G^2$ is independently a hydrocarbon or hydrocarbonoxy having 1 to 30 carbon atoms; each $X^a$ is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris (aziridinyl) phosphine oxide. When present, phosphorus-containing flame retardants can be present in amounts of 0.1 to 10 percent by weight, based on the total weight of the polyester-polycarbonate and poly(alkylene ester).

Halogenated materials may also be used as flame retardants, for example halogenated compounds and resins of formula (19):

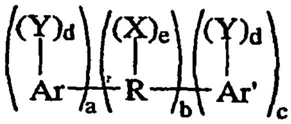

(19)

wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (19) are each independently mono- or polycarbocyclic aromatic groups such as phenylene, biphenylene, terphenylene, naphthylene, or the like.

Y is an organic, inorganic, or organometallic radical, for example: halogen, e.g., chlorine, bromine, iodine, fluorine; ether groups of the general formula OE, wherein E is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl, cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

The hydroxyl and Y substituents on the aromatic groups, Ar and Ar', can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants can be present in amounts of 0.1 to 10 percent by weight, based on the total weight of the polyester-polycarbonate and poly(alkylene ester).

Inorganic flame retardants may also be used, for example salts of $C_{2-16}$ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such

as $Na_2CO_3$, $K_2CO_3$, $MgCO_3$, $CaCO_3$, and $BaCO_3$ or fluoro-anion complexes such as $Li_3AlF_6$, $BaSiF_6$, $KBF_4$, $K_3AlF_6$, $KAlF_4$, $K_2SiF_6$, and/or $Na_3AlF_6$ or the like. When present, inorganic flame retardant salts can be present in amounts of 0.1 to 5 percent by weight, based on the total weight of the polyester-polycarbonate and poly(alkylene ester).

The thermoplastic composition may further comprise an ionizing radiation stabilizing additive. Exemplary ionizing radiation stabilizing additives include certain aliphatic alcohols, aromatic alcohols, aliphatic diols, aliphatic ethers, esters, diketones, alkenes, thiols, thioethers and cyclic thioethers, sulfones, dihydroaromatics, diethers, nitrogen compounds, or a combination comprising at least one of the foregoing. Alcohol-based stabilizing additives may be selected from mono, di-, or polysubstituted alcohols, and can be straight, branched, cyclic and/or aromatic. Suitable aliphatic alcohols may include alkenols with sites of unsaturation, examples of which include 4-methyl-4-penten-2-ol, 3-methylpentene-3-ol, 2-methyl-4-penten-2-ol, 2,4-dimethyl-4-penten-2-ol, 2-phenyl-4-penten-2-ol, and 9-decen-1-ol; tertiary alcohols including 3-hydroxy-3-methyl-2-butanone, 2-phenyl-2-butanol, and the like; hydroxy-substituted tertiary cycloaliphatics such as 1-hydroxy-1-methyl-cyclohexane; and hydroxymethyl aromatics having an aromatic ring with carbinol substituents such as a methylol group ($-CH_2OH$) or a more complex hydrocarbon group such as ($-CRHOH$) or ($-CR_2OH$), wherein R is straight chain $C_1$-$C_{20}$ alkyl or branched $C_1$-$C_{20}$ alkyl. Exemplary hydroxy carbinol aromatics include benzhydrol, 2-phenyl-2-butanol, 1,3-benzenedimethanol, benzyl alcohol, 4-benzyloxy-benzyl alcohol, and benzyl-benzyl alcohol.

Useful classes of ionizing radiation stabilizing additives are di- and polyfunctional aliphatic alcohols, also referred to as aliphatic diols and aliphatic polyols. Specifically useful are aliphatic diols of formula (20):

$$HO-(C(A')(A''))_d-S-(C(B')(B''))_e-OH \qquad (20)$$

wherein A', A", B', and B" are each independently H or $C_1$-$C_6$ alkyl; S is $C_1$-$C_{20}$ alkyl, $C_2$-$C_{20}$ alkyleneoxy, $C_3$-$C_6$ cycloalkyl, or $C_3$-$C_6$ substituted cycloalkyl; and d and e are each 0 or 1, with the proviso that, when d and e are each 0, S is selected such that both -OH groups are not connected directly to a single common carbon atom.

In formula (20), A', A", B', and B" can each be independently selected from H, methyl, ethyl, n-propyl, isopropyl, n-butyl, sec-butyl, t-butyl, n-pentyl, 2-pentyl, 3-pentyl, isopentyl, neopentyl, n-hexyl, 2-hexyl, 3-hexyl, 2-methyl pentyl, 3-methylpentyl, 2,2-dimethylbutyl, 2,3-dimethylbutyl, and the like, and a combination comprising at least one of the foregoing alkyl groups.

Spacer group S can be selected from methanediyl, ethanediyl, 1,1-ethanediyl, 1,1-propanediyl, 1,2-propanediyl, 1,3-propanediyl, 2,2-propanediyl, 1,1-butanediyl, 1,2-butanediyl, 1,3-butanediyl, 1,4-butanediyl, 2,2-butanediyl, 2,3-butanediyl, 1,1-pentanediyl, 1,2- pentanediyl, 1,3- pentanediyl, 1,4- pentanediyl, 1,5- pentanediyl, 2,2-pentanediyl, 2,3-pentanediyl, 2,4- pentanediyl, 3,3- pentanediyl, 2-methyl-1,1-butanediyl, 3-methyl-1,1-butanediyl, 2-methyl-1,2-butanediyl, 2-methyl,-1,3-butanediyl, 2-methyl-1,4-butanediyl, 2-methyl-2,2-butanediyl, 2-methyl-2,3-butanediyl, 2,2-dimethyl-1,1-propanediyl, 2,2-dimethyl-1,2-propanediyl, 2,2-dimethyl-1,3-propanediyl, 3,3-dimethyl-1,1-propanediyl, 3,3-dimethyl-1,2-propanediyl, 3,3-dimethyl-2,2-propanediyl, 1,1-dimethyl-2,3-propanediyl, 3,3-dimethyl-2,2-propanediyl, 1,1-hexanediyl, 1,2- hexanediyl, 1,3- hexanediyl, 1,4-hexanediyl, 1,5- hexanediyl, 1,6- hexanediyl, 2,2- hexanediyl, 2,3-hexanediyl, 2,4-hexanediyl, 2,5- hexanediyl, 3,3- hexanediyl, 2-methyl-1,1-pentanediyl, 3-methyl-1,1-pentanediyl, 2-methyl-1,2-pentanediyl, 2-methyl-1,3-pentanediyl, 2-methyl-1,4-pentanediyl, 2-methyl-2,2-pentanediyl, 2-methyl-2,3-pentanediyl, 2-methyl-2,4-pentanediyl, 2,2-dimethyl-1,1-butanediyl, 2,2-dimethyl-1,2-butanediyl, 2,2-dimethyl-1,3-butanediyl, 3,3-dimethyl-1,1-butanediyl, 3,3-dimethyl-1,2-butanediyl, 3,3-dimethyl-2,2-butanediyl, 1,1-dimethyl-2,3-butanediyl, 3,3-dimethyl-2,2-butanediyl, and the like; isomers of octanediyl, decanediyl, undecanediyl, dodecanediyl, hexadecanediyl, octadecanediyl, icosananediyl, and docosananediyl; and substituted and unsubstituted cyclopropanediyl, cyclobutanediyl, cyclopentanediyl, cyclohexanediyl, wherein substituents may be the points of radical attachment, such as in 1,4-dimethylenecyclohexane, or may include branched and straight chain alkyl, cycloalkyl, and the like. Additionally, the spacer group S may be selected from one or more diradicals comprising polyalkyleneoxy units, such as ethyleneoxy, 1,2-propyleneoxy, 1,3-propyleneoxy, 1,2-butyleneoxy, 1,4-butyleneoxy, 1,6-hexyleneoxy, and the like; and a combination comprising at least one of these.

Specific examples of suitable aliphatic diols include ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; alicyclic alcohols such as 1,3-cyclobutanediol, 2,2,4,4-tetramethylcyclobutanediol, 1,2-cyclopentanediol, 1,2-cyclohexanediol, 1,3-cyclohexanediol, 1,4-cyclohexanediol, 1,4-dimethylolcyclohexane, and the like; branched acyclic diols such as 2,3-dimethyl-2,3-butanediol (pinacol), and 2-methyl-2,4-pentanediol (hexylene glycol); and polyalkyleneoxy-containing alcohols such as polyethylene glycol, polypropylene glycol, block or random poly(ethyleneglycol-co-propyleneglycols), and diols of copolymers containing polyalkyleneoxy-groups. Useful polyols may include polyaryleneoxy compounds such as polyhydroxystyrene; alkyl polyols such as polyvinylalcohol, polysaccharides, and esterified

polysaccharides. A combination comprising at least one of the foregoing may also be useful. Specifically suitable diols include 2-methyl-2,4-pentanediol (hexylene glycol), polyethylene glycol, and polypropylene glycol.

Suitable aliphatic ethers may include alkoxy-substituted cyclic or acyclic alkanes such as, for example, 1,2-dialkoxyethanes, 1,2-dialkoxypropanes, 1,3-dialkoxypropanes, alkoxycyclopentanes, alkoxycyclohexanes, and the like. Ester compounds (-COOR) may be useful as stabilizers wherein R may be a substituted or unsubstituted, aromatic or aliphatic, hydrocarbon and the parent carboxy compound may likewise be substituted or unsubstituted, aromatic or aliphatic, and/or mono- or polyfunctional. When present, substituents may include, for example, $C_1$-$C_8$ alkyl, $C_1$-$C_8$ alkyl ether, $C_6$-$C_{20}$ aryl, and the like. Esters which have proven useful include tetrakis(methylene [3,5-di-t-butyl-4-hydroxy-hydrocinnamate])methane, 2,2'-oxamido bis(ethyl-3-(3,5-di-t-butyl-4-hydroxyphenyl) propionate, and trifunctional hindered phenolic ester compounds such as GOOD-RITE® 3125, available from B.F. Goodrich in Cleveland OH.

Diketone compounds may also be used, specifically those having two carbonyl functional groups and separated by a single intervening carbon atoms such as, for example 2,4-pentadione.

Sulfur-containing compounds, suitable for use as stabilizing additives, can include thiols, thioethers and cyclic thioethers. Thiols include, for example, 2-mercaptobenzothiazole; thioethers include dilaurylthiopropionate; and cyclic thioethers include 1,4-dithiane, 1,4,8,11-tetrathiocyclotetradecane. Cyclic thioethers containing more than one thioether group are useful, specifically those having a single intervening carbon between two thioether groups such as in, for example, 1,3-dithiane. The cyclic ring may contain oxygen or nitrogen members.

Aryl or alkyl sulfone stabilizing additives of general structure R-S(O)$_2$-R' may also be used, where R and R' comprise $C_1$-$C_{20}$ alkyl, $C_6$-$C_{20}$ aryl, $C_1$-$C_{20}$ alkoxy, $C_6$-$C_{20}$ aryloxy, substituted derivatives thereof, and the like, and wherein at least one of R or R' is a substituted or unsubstituted benzyl. When present, substituents may include, for example, $C_1$-$C_8$ alkyl, $C_1$-$C_8$ alkyl ether, $C_6$-$C_{20}$ aryl, and the like. An example of a specifically useful sulfone is benzylsulfone.

Alkenes may be used as stabilizing additives. Suitable alkenes may include olefins of general structure RR'C=CR"R'" wherein R, R', R", and R'" may each individually be the same or different and may be selected from hydrogen, $C_1$-$C_{20}$ alkyl, $C_1$-$C_{20}$ cycloalkyl, $C_1$-$C_{20}$ alkenyl, $C_1$-$C_{20}$ cycloalkenyl, $C_6$-$C_{20}$ aryl, $C_6$-$C_{20}$ arylalkyl, $C_6$-$C_{20}$ alkylaryl, $C_1$-$C_{20}$ alkoxy, $C_6$-$C_{20}$ aryloxy and substituted derivatives thereof. When present, substituents may include, for example, $C_1$-$C_8$ alkyl, $C_1$-$C_8$ alkyl ether, $C_6$-$C_{20}$ aryl, and the like. The olefins may be acyclic, exocyclic, or endocyclic. Examples of specifically useful alkenes include 1,2-diphenyl ethane, allyl phenol, 2,4-dimethyl-1-pentene, limonene, 2-phenyl-2-pentene, 2,4-dimethyl-1-pentene, 1,4-diphenyl-1,3-butadiene, 2-methyl-1-undecene, 1-dodecene, and the like, or a combination comprising at least one of the foregoing.

Hydroaromatic compounds may also be useful as stabilizing additives, including partially hydrogenated aromatics, and aromatics in combination with an unsaturated ring. Specific aromatics include benzene and/or naphthalene based systems. Examples of suitable hydroaromatic compounds include indane, 5,6,7,8-tetrahydro-1-naphthol, 5,6,7,8-tetrahydro-2-naphthol, 9,10-dihydro anthracene, 9,10-dihydrophenanthrene, 1-phenyl-1-cyclohexane, 1,2,3,4-tetrahydro-1-naphthol, and the like, or a combination comprising at least one of the foregoing.

Diethers, including hydrogenated and nonhydrogenated, and substituted and unsubstituted pyrans, may also be used as stabilizing additives. When present, substituents may include $C_1$-$C_8$ alkyl, $C_1$-$C_8$ alkyl ether, or $C_6$-$C_{20}$ aryl. The pyrans may have substituents including $C_1$-$C_{20}$ alkyl, $C_6$-$C_{20}$ aryl, $C_1$-$C_{20}$ alkoxy, or $C_6$-$C_{20}$ aryloxy, and which may be positioned on any carbon of the pyran ring. Specifically useful substituent groups include $C_1$-$C_{20}$ alkoxy or $C_6$-$C_{20}$ aryloxy, located on the ring at the six position. Hydrogenated pyrans are specifically useful. Examples of suitable diethers include dihydropyranyl ethers and tetrahydropyranyl, ethers.

Nitrogen compounds which may function as stabilizers include high molecular weight oxamide phenolics, for example, 2,2-oxamido bis-[ethyl 3-(3,5-di-tert-butyl-4-hydroxyphenyl)propionate], high molecular weight oxalic anilides and their derivatives, and amine compounds such as thiourea.

Ionizing radiation stabilizing additives are typically used in amounts of 0.001 to 1 wt%, specifically 0.005 to 0.75 wt%, more specifically 0.01 to 0.5 wt%, and still more specifically 0.05 to 0.25 wt%, based on the total weight of the polyester-polycarbonate and poly(alkylene ester).

Each of the foregoing wt% values are based on the combined weights of the polyester-polycarbonate and the poly(alkylene terephthalate) polymer, excluding any other additives. In an embodiment, the thermoplastic composition may comprise an additive including an antioxidant, a heat stabilizer, a light stabilizer, an ultraviolet light absorber, a plasticizer, a mold release agent, a lubricant, an antistatic agent, a pigment, a dye, a flame retardant, a gamma stabilizer, or a combination comprising at least one of the foregoing additives. In a specific embodiment, the foregoing additives are present in a total amount of less than or equal to 5 wt%, based on the total weight of the polyester-polycarbonate and poly(alkylene ester). In a specific embodiment, the thermoplastic composition consists of: the polyester-polycarbonate comprising isophthalate-terephthalate-resorcinol (ITR) ester units; poly(alkylene ester) comprising ethylene terephthalate units, 1,4-cyclohexylenedimethylene units, or a combination comprising ethylene terephthalate units and 1,4-cyclohexylenedimethylene units; and 0 to 5 wt% of an additive based on the total weight of polyester-polycarbonate and poly(alkylene ester). It is understood that the amounts and types of the additives are selected such that the desired

properties of the thermoplastic composition are not significantly adversely affected.

The thermoplastic composition may be manufactured by methods generally available in the art, for example, in one embodiment, in one manner of proceeding, powdered polyester-polycarbonate polymer, poly(alkylene terephthalate) polymer, and other optional components including stabilizer packages (e.g., antioxidants, gamma stabilizers, heat stabilizers, ultraviolet light stabilizers, and the like) and/or other additives are first blended, in a HENSCHEL-Mixer® high speed mixer. Other low shear processes including but not limited to hand mixing may also accomplish this blending. The blend is then fed into the throat of an extruder via a hopper. Alternatively, one or more of the components may be incorporated into the composition by feeding directly into the extruder at the throat and/or downstream through a sidestuffer. Where desired, the polyester-polycarbonate, poly(alkylene terephthalate) polymer and any desired polymer and/or additives may also be compounded into a masterbatch and combined with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate may be one-fourth inch long or less as desired. Such pellets may be used for subsequent molding, shaping, or forming.

In a specific embodiment, a method of preparing a thermoplastic composition comprises melt combining a polyester-polycarbonate polymer and an poly(alkylene terephthalate) polymer. The melt combining can be done by extrusion. In an embodiment, the compositions of polyester-polycarbonate polymer and poly(alkylene terephthalate) polymer are each selected such that the sum of the ITR ester units in the polyester-polycarbonate, and the CHDM ester units in the poly(alkylene terephthalate) polymer, is a value greater than 40. In addition, the polyester-polycarbonate and poly(alkylene ester) may be selected such that the optical properties of the thermoplastic composition are optimized to have a light transmission greater than or equal to 80 %, and a haze of less than or equal to 5%, as measured on 2.5 mm molded articles consisting of the polyester-polycarbonate and poly(alkylene ester) and according to ASTM D1003-00, while mechanical performance is at a desirable level. In a further specific embodiment, additives in an amount of 5 wt% or less of the total weight of polycarbonate is combined with the polyester-polycarbonate polymer and poly(alkylene terephthalate) polymer to make the thermoplastic composition. In an embodiment, the proportions of polyester-polycarbonate polymer, poly(alkylene terephthalate) polymer, and where desired, polycarbonate, are selected such that the optical properties of the thermoplastic composition are optimized as above while mechanical performance is at a desirable level.

In a specific embodiment, the thermoplastic composition is extruded using a twinscrew extruder. The extruder is typically operated at a temperature of 180 to 385°C, specifically 200 to 330°C, more specifically 220 to 300°C, wherein the die temperature may be different. The extruded thermoplastic composition is quenched in water and pelletized.

Shaped, formed, or molded articles comprising the thermoplastic compositions are also provided. Examples of articles comprising the thermoplastic composition include lens covers, protective sheets, films, fibers, dishware, medical applications, automotive, garden equipment, sports and leisure articles, and the like.

The thermoplastic composition is further illustrated by the following non-limiting

examples.

The compositions were prepared by compounding on a Werner and Pfleider 25 mm intermeshing twin screw extruder at 300 rpm with barrel temperatures 40-200-250-285-300-300-300-300 °C. The plaques used for this study were molded on an Engel 75T molding apparatus having 4 temperature zones set at 280-290-300-295°C (mold temperature 90°C).

Polymer molecular weight was determined by gel permeation chromatography (GPC) using a crosslinked styrene-divinylbenzene gel column, a sample concentration of about 1 milligram per milliliter, and was calibrated using polycarbonate standards. Haze and transmission (%T) were each measured on 2.5 millimeter plaques according to ASTM D1003-00. The broadband spectral transmission was measured on a Hitachi U4100 spectrophotometer.

Thermoplastic compositions for the examples and comparative examples were prepared using the components shown in Table 1.

Table 1.

| Component | Description | Source |
|---|---|---|
| PC | Polycarbonate resin (Mw = 25,000 g/mol, PS standards) | GE Plastics |
| 20:80 ITR-PC | Poly(20 mol% isophthalate-terephthalate-resorcinol ester)-co-(80 mol% bisphenol-A carbonate) copolymer (Mw = 25,000 g/mol, PS standards) | GE Plastics |
| 40:60 ITR-PC | Poly(40 mol% isophthalate-terephthalate-resorcinol ester)-co-(60 mol% bisphenol-A carbonate) copolymer (Mw = 25,000 g/mol, PS standards) | GE Plastics |

(continued)

| Component | Description | Source |
|---|---|---|
| 80:20 ITR-PC | Poly(80 mol% isophthalate-terephthalate-resorcinol)-co-(20 mol% bisphenol-A carbonate) copolymer (Mw = 25,000 g/mol, PS standards) | GE Plastics |
| PET | Poly(ethylene terephthalate) (Mw = 88,000 g/mol, PS standards) | DuPont Chemical |
| 5:95 PETG | Poly(95 mol% ethylene terephthalate)-co-(5 mol% 1,4-cyclohexanedimethylene terephthalate) (Mw = 70,000 g/mol, PS standards) | Eastman . Chemical |
| 30:70 PETG | Poly(70 mol% ethylene terephthalate)-co-(30 mol% 1,4-cyclohexanedimethylene terephthalate) (Mw = 70,000 g/mol, PS standards) | Eastman Chemical |
| PCTG | Poly(20 mol% ethylene terephthalate)-co-(80 mol% 1,4-cyclohexanedimethylene terephthalate) (Mw = 70,000 g/mol, PS standards) | Eastman Chemical |
| PCT | Poly(1,4-cyclohexanedimethylene terephthalate) (Mw = 70,000 g/mol, PS standards) | Eastman Chemical |

General Procedure for Preparation of Poly(isophthalate-terephthalate-resorcinol ester)-co-(bisphenol-A carbonate) (ITR-PC). Each of the ITR-PC copolymers used herein was prepared according to the following general procedure. A 30 liter round bottom reactor equipped with a mechanical stirrer, pH electrode, condenser, and two addition tubes connected to metering pumps was charged with resorcinol (12.5 to 25 mole percent excess relative to the total moles of diacid chloride), water (to provide about 34 to about 35 wt% salts following preparation of the hydroxy-terminated polyester), methylene chloride (6 liters), and triethylamine (2 mole percent). The mixture was stirred with a 6-inch impeller at about 300-350 rpm. One addition tube was connected to a solution consisting of a 50/50 mixture of isophthaloyl and terephthaloyl chloride and enough methylene chloride to make an approximately 35 wt% diacid chloride solution. The other addition tube was connected to a 50 wt% aqueous sodium hydroxide solution. Over the course of 10 minutes, the diacid chloride solution containing 3.42 moles isophthaloyl dichloride and 3.42 moles terephthaloyl dichloride, and 85 to 95 mol% of the NaOH solution (based on diacid chloride) were added at constant molar flow rates to the reactor. Upon completion of the acid chloride addition, a further amount of NaOH solution was added to the reactor over about 3 minutes in order to adjust the pH to approximately 8.25, and the mixture was allowed to stir for roughly 10 minutes. After formation of the resulting hydroxy-terminated polyesters (HTPE) was complete, phenol (3.4 mol% based on total bisphenol-A), bisphenol-A (BPA), water and methylene chloride were added to the mixture. The amount of BPA added was based upon the formula:

$$\text{Moles BPA added} = 6.84 \text{ moles diacid chloride x } ((\text{mol\% PC})/(\text{mol\% ITR}))$$

wherein, for example, a polymer with a desired composition of 20 mol% carbonate units and 80 mol% ester units (i.e., 80:20 ITR-PC), uses an amount of BPA = (6.84 mole x (20/80) = 6.84 x 0.25 = 1.71 moles BPA.

Prior to phosgenation, sufficient additional water was added to dissolve all of the salt (NaCl) present in the reaction mixture at the end of formation of the hydroxy-terminated polyester intermediate. Additional methylene chloride was introduced to provide a concentration of solids in the organic phase at the end of phosgenation of about 11 to about 17 wt%.

The mixture comprising the hydroxy-terminated polyester, free phenol, free excess resorcinol, BPA, methylene chloride, salt, and triethylamine (TEA) was then phosgenated in the same reactor used to prepare the hydroxy-terminated polyester intermediate. About 1.4 equivalents (based on the total moles of free bisphenol-A) of phosgene and 50 weight percent sodium hydroxide solution (50 wt % NaOH) were then introduced at a constant rate over a period of about 55 minutes while maintaining a pH of about pH 8.5 until about 60 mol% of the stoichiometric amount of phosgene had been added (about 60 mol% bisphenol conversion). The pH was adjusted about 9.5 and the remaining phosgene was added. Upon completion of phosgene addition the reaction mixture was stirred for several minutes. The methylene chloride solution containing the product polyester-polycarbonate was separated from the brine layer and washed twice with 1N HCl, and four times with deionized water. The volumes of the aqueous washes were roughly equal to the volume of the product polymer solution. The product was isolated by injection of steam into a well-agitated mixture of hot water and

the methylene chloride solution of the product polyester-polycarbonate. The product was isolated as a white powder was filtered and dried for 24 hours at 80 to 100°C. The product polyester-polycarbonate was characterized by GPC (Mw, polystyrene molecular weight standards). The analytical results were consistent with the formation of block polyester-polycarbonates. NMR indicated that the product polyester-polycarbonate was fully endcapped as shown by the absence of free terminal hydroxyl groups (undetectable by NMR) and acid end-groups (also undetectable by NMR).

Comparative Examples 1-10 and Examples 1-10 were prepared by melt blending the polycarbonate, 20:80 ITR-PC, 40:60 ITR-PC, or 80:20 ITR-PC with PET according to the method described above. The weight ratios used in the examples and comparative examples are as described in Table 2, below.

Table 2.

| | Amounts of Polymer in Weight Percent (wt%) | | | | | | | |
|---|---|---|---|---|---|---|---|---|
| | PC | 20:80 ITR-PC | 40:60 ITR-PC | 80:20 ITR-PC | PET | Mol % ITR plus mol % CHDM | %T | Haze |
| CEx 1 | 15 | -- | -- | -- | 85 | 0 | <80 | >10[1] |
| CEx 2 -- | -- | 15 | -- | -- | 85 | 20 | 68 | 100 |
| Ex 1 | -- | -- | 15 | -- | 85 | 40 | 83.5 | 5.5 |
| Ex 2 | -- | -- | -- | 15 | 85 | 80 | 86.4 | 2.7 |
| CEx 3 | 30 | -- | -- | -- | 70 | 0 | 72 | 93 |
| CEx 4 | -- | 30 | -- | -- | 70 | 20 | 60 | 96 |
| Ex 3 | -- | -- | 30 | -- | 70 | 40 | 83 | 4 |
| Ex 4 | -- | -- | -- | 30 | 70 | 80 | 85 | 3 |
| CEx 5 | 50 | -- | -- | -- | 50 | 0 | 76 | 50 |
| CEx 6 | -- | 50 | -- | -- | 50 | 20 | 64 | 69 |
| Ex 5 | -- | - | 50 | -- | 50 | 40 | 86 | 4 |
| Ex 6 | -- | -- | -- | 50 | 50 | 80 | 87 | 2 |
| CEx 7[2] | 70 | -- | -- | -- | 30 | 0 | <80 | >10[1] |
| CEx 8 | -- | 70 | -- | -- | 30 | 20 | 68 | 31 |
| Ex 7 | -- | -- | 70 | -- | 30 | 40 | 88 | 2 |
| Ex 8 | -- | -- | -- | 70 | 30 | 80 | 87 | 3 |
| CEx 9 | 85 | -- | -- | -- | 15 | 0 | <80 | >10[1] |
| CEx 10 | -- | 85 | -- | -- | 15 | 20 | 84.5 | 5.3 |
| Ex 9 | -- | -- | 85 | -- | 15 | 40 | 88.8 | 1.5 |
| Ex 10 | -- | -- | -- | 85 | 15 | 80 | 87 | 2 |

1 The haze values are less than 10% but not less than 5%.
[2] Not possible to compound; dye swell, opaque material.

As seen in Table 2, compositions prepared using PC or 20:80 ITR-PC, and PET (with 0 mol% CHDM) (Comparative Examples 1-10), for all weight blend ratios of 15:85, 30:70, 50:50, 70:30, and 85:15 respectively, each provide compositions having less than 80% light transmission (%T), and less than 10% haze but not less than or equal to 5% haze. These compositions may be opaque, or may have undesirable light transmission and/or haze, and thus do not meet the criteria for usefulness in the context of the present disclosure. Compositions of PET with 40:60 ITR-PC and/or 80:20 ITR-PC (Examples 1-10), by contrast, provide blends with light transmission greater than or equal to 80% and haze values less than or equal to 5%. The compositions meeting the light transmission and haze requirements each had a total mol % ITR plus mol % CHDM of greater than or equal to 40.

Comparative Examples 11-16 and Examples 11-16 were prepared by melt blending the polycarbonate, 20:80 ITR-PC, 40:60 ITR-PC, or 80:20 ITR-PC with PETG having 5 mole percent 1,4-cyclohexyldimethylene terephthalate units (5:95 PETG), according to the method described above. The weight ratios used in the examples and comparative

examples are as described in Table 3, below.

Table 3.

| | Amounts of Polymer in Weight Percent (wt%) | | | | | | | |
|---|---|---|---|---|---|---|---|---|
| | PC | 20:80 ITR-PC | 40:60 ITR-PC | 80:20 ITR-PC | 5:95 PETG | Mol % ITR plus mol % CHDM | %T | Haze |
| CEx 11 | 30 | -- | -- | -- | 70 | 5 | 71 | 98 |
| CEx 12 | -- | 30 | -- | -- | 70 | 25 | 60 | 96 |
| Ex 11 | -- | -- | 30 | -- | 70 | 45 | 88 | 2 |
| Ex 12 | -- | -- | -- | 30 | 70 | 85 | 88 | 2 |
| CEx 13 | 50 | -- | -- | -- | 50 | 5 | 74 | 53 |
| CEx 14 | -- | 50 | -- | -- | 50 | 25 | 63 | 72 |
| Ex 13 | -- | -- | 50 | -- | 50 | 45 | 89 | 1.5 |
| Ex 14 | -- | -- | -- | 50 | 50 | 85 | 89 | 2 |
| CEx 15[3] | 70 | -- | -- | -- | 30 | 5 | 62 | 95 |
| CEx 16 | -- | 70 | -- | -- | 30 | 25 | 75 | 21 |
| Ex 15 | -- | -- | 70 | -- | 30 | 45 | 88 | 2 |
| Ex 16 | -- | -- | -- | 70 | 30 | 85 | 86 | 4 |
| [3] Not possible to compound; dye swell, opaque material. | | | | | | | | |

As seen in Table 3, compositions prepared using PC or 20:80 ITR-PC, and 5:95 PETG (with 5 mol% CHDM) (Comparative Examples 11-16), for all weight blend ratios of 30:70, 50:50, and 70:30 respectively, each provide compositions having less than 80% light transmission and/or greater than 10% haze but not less than or equal to 5% haze. These compositions may be opaque, or may have undesirable light transmission and/or haze, and thus do not meet the criteria for usefulness in the context of the present disclosure. Compositions of 5:95 PETG with 40:60 ITR-PC and/or 80:20 ITR-PC (Examples 11-16), by contrast, provide blends with light transmission greater than or equal to 80% and haze values less than or equal to 5%. The compositions meeting the light transmission and haze requirements each had a total mol % ITR plus mol % CHDM of greater than or equal to 40.

Comparative Examples 17-19 and Examples 17-25 were prepared by melt blending the polycarbonate, 20:80 ITR-PC, 40:60 ITR-PC, or 80:20 ITR-PC with 30:70 PETG having 30 mole percent 1,4-cyclohexyldimethylene terephthalate units, according to the method described above. The weight ratios used in the examples and comparative examples are as described in Table 4, below.

Table 4.

| | Amounts of Polymer in Weight Percent (wt%) | | | | | | | |
|---|---|---|---|---|---|---|---|---|
| | PC | 20:80 ITR-PC | 40:60 ITR-PC | 80:20 ITR-PC | 30:70 PETG | Mol % ITR plus mol % CHDM | %T | Haze |
| CEx 17 | 30 | -- | -- | -- | 70 | 30 | 61.5 | 80.7 |
| Ex 17 | -- | 30 | -- | -- | 70 | 50 | 89.9 | 1.3 |
| Ex 18 | -- | -- | 30 | -- | 70 | 70 | 90.0 | 1.3 |
| Ex 19 | -- | -- | -- | 30 | 70 | 100 | 89 | 2.4 |
| CEx 18 | 50 | -- | -- | -- | 50 | 30 | 60.1 | 45.6 |
| Ex 20 | -- | 50 | -- | -- | 50 | 50 | 90.2 | 1.1 |
| Ex 21 | -- | -- | 50 | -- | 50 | 70 | 89.5 | 2 |

(continued)

| | Amounts of Polymer in Weight Percent (wt%) | | | | | | | |
|---|---|---|---|---|---|---|---|---|
| Ex 22 | -- | -- | -- | 50 | 50 | 100 | 89 | 1.6 |
| CEx 19 | 70 | -- | -- | -- | 30 | 30 | 71.3 | 20.7 |
| Ex 23 | -- | 70 | -- | -- | 30 | 50 | 90.3 | 0.92 |
| Ex 24 | -- | -- | 70 | -- | 30 | 70 | 89.6 | 1.1 |
| Ex 25 | -- | -- | -- | 70 | 30 | 100 | 87.8 | 3.1 |

As seen in Table 4, compositions prepared using PC and 30:70 PETG (with 30 mol% CHDM) (Comparative Examples 17-19), for all weight blend ratios of 30:70, 50:50, and 70:30 respectively, each provide compositions having less than 80% light transmission and/or greater than 5% haze. These compositions may be opaque, or may have undesirable light transmission and/or haze, and thus do not meet the criteria for usefulness in the context of the present disclosure. Compositions of 30:70 PETG with 20:80 ITR-PC and/or 40:60 ITR-PC and/or 80:20 ITR-PC (Examples 17-25), by contrast, provide blends with light transmission greater than or equal to 80% and haze values less than or equal to 5%. The compositions meeting the light transmission and haze requirements each had a total mol % ITR plus mol % CHDM of greater than or equal to 40.

Comparative Examples 20 and 21, and Examples 26-31 were prepared by melt blending PC, 20:80 ITR-PC, 40:60 ITR-PC, or 80:20 ITR-PC with either PCTG having 80 mole percent 1,4-cyclohexyldimethylene terephthalate units, or PCT having 100 mole percent 1,4-cyclohexyldimethylene terephthalate units, according to the method described above. The weight ratios used in the examples and comparative examples are as described in Table 5, below.

Table 5.

| | Amounts of Polymer in Weight Percent (wt%) | | | | | | | | |
|---|---|---|---|---|---|---|---|---|---|
| | PC | 20:80 ITR-PC | 40:60 ITR-PC | 80:20 ITR-PC | PCTG | PCT | Mol % ITR plus mol % CHDM | %T | Haze |
| CEx 20 | 50 | -- | -- | -- | 50 | -- | 80 | 90 | 1.1 |
| Ex 26 | -- | 50 | -- | -- | 50 | -- | 100 | 90 | 0.8 |
| Ex 27 | -- | -- | 50 | -- | 50 | -- | 120 | 90 | 0.8 |
| Ex 28 | -- | -- | -- | 50 | 50 | -- | 160 | 90 | 0.9 |
| CEx 21 | 50 | -- | -- | -- | -- | 50 | 100 | 90 | 1.8 |
| Ex 29 | -- | 50 | -- | -- | -- | 50 | 120 | 90 | 1.7 |
| Ex 30 | -- | -- | 50 | -- | -- | 50 | 140 | 90 | 1.5 |
| Ex 31 | -- | -- | -- | 50 | -- | 50 | 180 | 90 | 1.4 |

As seen in Table 5, each of the comparative examples prepared using blends of PC with either PCTG (80:20 ITR-PC) or PCT (with 100 mol% CHDM) (Comparative Examples 20 and 21) had a total mol % ITR plus mol % CHDM of 80 or greater, a light transmittance of greater than 80%, a haze less than 5%, and are known compositions. Compositions of 20:80 ITR-PC, 40:60 ITR-PC, or 80:20 ITR-PC, with PCTG (Examples 26-28) or PCT (Examples 29-31), had a total mol % ITR plus mol % CHDM of greater than or equal to 100, also provide blends with light transmission greater than or equal to 80% and haze values less than or equal to 5%. Thus, each of the compositions having blends of ITR with PCTG or PCT is transparent.

Compounds are described herein using standard nomenclature. A dash ("-") that is not between two letters or symbols is used to indicate a point of attachment for a substituent. For example, -CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another.

While typical embodiments have been set forth for the purpose of illustration, the foregoing descriptions should

not be deemed to be a limitation on the scope herein. Accordingly, various modifications, adaptations, and alternatives may occur to one skilled in the art without departing from the spirit and scope herein.

## Claims

1. A thermoplastic composition comprising:

   a polyester-polycarbonate polymer comprising isophthalate-terephthalate-resorcinol ester units and carbonate units in a molar ratio of 20:80 to 80:20, and
   a poly(alkylene ester) comprising ethylene terephthalate units and 1,4-cyclohexyldimethylene terephthalate units in a molar ratio of 20:80 to 95:5,

   wherein the polyester-polycarbonate polymer and the poly(alkylene ester) polymer are present in the thermoplastic composition in a weight ratio of 20:80 to 80:20,
   wherein the sum of the mole percentage values of isophthalate-terephthalate-resorcinol ester units in the polyester-polycarbonate polymer, and of the mole percentage values of 1,4-cyclohexanedimethylene terephthalate units in the poly(alkylene ester) polymer, is a value greater than 40, and
   wherein a molded article having a thickness of 2.5 mm and consisting of the polyester-polycarbonate, the poly (alkylene ester) polymer, and less than or equal to 5 weight percent of an additive, has a haze of less than or equal to 5%, measured according to ASTM D1003-00.

2. The thermoplastic composition of claim 1 wherein the polyester-polycarbonate polymer further comprises additional ester units.

3. The thermoplastic composition of claim 2 wherein the additional ester units comprise isophthalate-terephthalate esters of dihydroxy compounds of formula

   $$HO-A^1-Y-A^2-OH$$

   wherein each of $A^1$ and $A^2$ is a monocyclic divalent aryl radical and Y is a bridging radical having one or two atoms that separate $A^1$ from $A^2$.

4. The thermoplastic composition of claim 1 wherein a molded article having a thickness of 2.5 mm and consisting of the polyester-polycarbonate, the poly(alkylene ester) polymer, and less than or equal to 5 weight percent of an additive, has a transparency of greater than or equal to 80%, measured according to ASTM D1003-00.

5. The thermoplastic composition of claim 1, wherein the isophthalate-terephthalate-resorcinol ester units have the structure;

   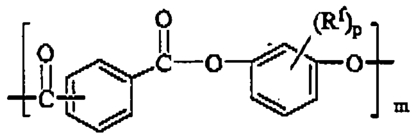

   wherein each $R^f$ is independently a halogen atom, a $C_{1-12}$ hydrocarbon group, or a $C_{1-12}$ halogen substituted hydrocarbon group; p is 0 to 4; and m is 2 to 500.

6. The thermoplastic composition of claim 5, wherein the polyester-polycarbonate has the structure;

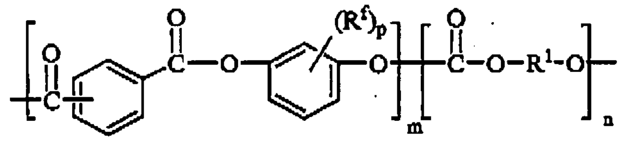

wherein each $R^f$ is independently a halogen atom, a $C_{1-12}$ hydrocarbon group, or a $C_{1-12}$ halogen substituted hydrocarbon group; p is 0 to 4, each $R^1$ is independently a $C_{6-30}$ arylene group, m is 2 to 500, and n is 2 to 500.

7. The thermoplastic composition of claim 6, wherein the polyester-polycarbonate is poly(isophthalate-terephthalate-resorcinol ester)-co-(bisphenol-A carbonate).

8. The thermoplastic composition of claim 1, wherein the poly(alkylene ester) is poly(ethylene terephthalate)-co-(1,4-cyclohexyldimethylene terephthalate),

9. The thermoplastic composition of claim 1, the thermoplastic composition comprises an additive including an antioxidant, a heat stabilizer, a light stabilizer, an ultraviolet light absorber, a plasticizer, a mold release agent, a lubricant, an antistatic agent, a pigment, a dye, a flame retardant, a gamma stabilizer, or a combination comprising at least one of the foregoing additives; wherein the amounts and types of the additives are selected such that the desired properties of the thermoplastic composition are not significantly adversely affected.

10. The thermoplastic composition of claim 9, wherein the additives are present in a total amount of less than or equal to 5 wt%, based on the total weight of the polyester-polycarbonate and poly(alkylene ester).

11. A method of forming a thermoplastic composition comprising melt combining:

a polyester-polycarbonate comprising isophthalate-terephthalate-resorcinol ester units and carbonate units in a molar ratio of 20:80 to 80:20, and
a poly(alkylene ester) comprising ethylene terephthalate units and 1,4-cyclohexyldimethylene terephthalate units in a molar ratio of 20:80 to 95:5,

wherein the polyester-polycarbonate polymer and the poly(alkylene ester) polymer are melt blended in the thermoplastic composition in a weight ratio of 20:80 to 80:20,
wherein the polyester-polycarbonate and polyalkylene ester are selected such that the sum of the mole percentage of isophthalate-terephthalate-resorcinol ester units in the polyester-polycarbonate polymer, and of the mole percentage of 1,4-cyclohexanedimethylene terephthalate units in the poly(alkylene terephthalate) polymer, is a value greater than 40, and
wherein a molded article having a thickness of 2.5 mm and consisting of the polyester-polycarbonate, the poly (alkylene ester) polymer, and less than or equal to 5 weight percent of an additive, has a haze of less than or equal to 5%, measured according to ASTM D 1003-00.

12. A thermoplastic composition prepared by the method of claim 11.

13. An article comprising the composition of claim 1.

**Patentansprüche**

1. Eine Thermoplastische Zusammensetzung, die folgendes umfasst:

ein Polyester-Polycarbonat-Polymer, das Isophthalat-Terephthalat-Resorcinol-Estereinheiten und Carbonateinheiten in einem Molverhältnis von 20:80 bis 80:20 umfasst, und
einen Poly(alkylenester), der Ethylenterephthalat-Einheiten und 1,4-Cyclohexyldimethyldimenterephthalat-Einheiten in einem Molverhältnis von 20:80 bis 95:5 umfasst;

worin das Polyester-Polycarbonat-Polymer und das Poly (alkylenester)-Polymer in der thermoplastischen Zusammensetzung in einem Gewichtsverhältnis von 20:80 bis 80:20 vorhanden sind,

worin die Summe der Molprozentwerte der Isophthalat-Terephthalat-Resorcinol-Estereinheiten in dem Polyester-Polycarbonat-Polymer und die Molprozentwerte der 1,4-Cyclohexandimethylenterephthalat-Einheiten in dem Poly (alkylenester)-Polymer ein Wert höher als 40 ist, und
worin ein geformter Artikel mit einer Dicke von 2,5 mm, der aus dem Polyester-Polycarbonat, dem Poly(alkylenester)-Polymer und weniger als oder gleich 5 Gewichtsprozent eines Zusatzstoffes besteht, eine Trübung von weniger als oder gleich 5 %, gemessen nach ASTM-D1003-00, hat.

**2.** Die thermoplastische Zusammensetzung gemäß Anspruch 1,
worin das Polyester-Polycarbonat-Polymer weiter zusätzliche Estereinheiten umfasst.

**3.** Die thermoplastische Zusammensetzung gemäß Anspruch 2,
worin die zusätzlichen Estereinheiten Isophthalat-Terephthalatester von Dihydroxyverbindungen mit der Formel

$$HO\text{-}A^1\text{-}Y\text{-}A^2\text{-}OH$$

umfassen, worin jedes von $A^1$ und $A^2$ ein monozyklisches zweiwertiges Arylradikal ist und Y ein brückenbildenden Rdikal mit einem oder zwei Atomen ist, die $A^1$ von $A^2$ trennen.

**4.** Die thermoplastische Zusammensetzung gemäß Anspruch 1,
worin ein geformter Artikel mit einer Dicke von 2,5 mm, der aus dem Polyester-Polycarbonat, dem Poly(alkylenester)-Polymer und weniger als oder gleich 5 Gewichtsprozent eines Zusatzstoffes besteht, eine Transparenz von mehr als oder gleich 80 %, gemessen nach ASTM D1003-00, hat.

**5.** Die thermoplastische Zusammensetzung gemäß Anspruch 1,
worin die Isophthalat-Terephthalat-Resorcinolester-Einheiten die Struktur

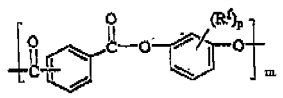

haben, worin jedes $R^f$ unabhängig ein Halogenatom, eine $C_{1-12}$-Kohlenwasserstoffgruppe oder eine $C_{1-12}$-Halogen-substituierte Kohlenwasserstoffgruppe ist, p 0 bis 4 ist und m 2 bis 500 ist.

**6.** Die thermoplastische Zuaammensetzung gemäß Anspruch 5,
worin das Polyester-Polycarbonat die Struktur:

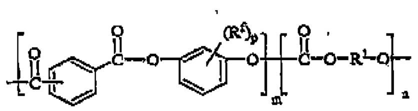

hat, worin jedes $R^f$ unabhängig ein Halogenatom, eine $C_{1-12}$-Kohlenwasserstoffgruppe oder eine $C_{1-12}$-Halogen-substituierte Kohlenwasserstoffgruppe ist; p 0 bis 4 ist, jedes $R^1$ unabhängig eine $C_{6-20}$-Arylengruppe ist, m 2 bis 500 und n 2 bis 500 ist.

**7.** Die thermoplastische Zusammensetzung gemäß Anspruch 6,
worin das Polyester-Polycarbonat Poly(isophthalat-terephthalat-resorcinolester)-co-(bisphenol-A-carbonat) ist.

**8.** Die thermoplastische Zusammensetzung gemäß Anspruch 1,
worin der Poly(alkylenester) Poly(ethylenterephthalat)-co-(1,4-cyclohexyldimethylenterephthalat) ist.

**9.** Die thermoplastische Zusammensetzung gemäß Anspruch 1, wobei die thermoplastische Zusammensetzung einen Zusatzstoff umfasst, der ein Antioxidans, einen Wärmestabilisator, einen Lichtstabilisator, eine UV-Licht absorbierende Substanz, einen Plastifikator, ein Entformungsmittel, ein Schmiermittel, ein Antistatikum, ein Pigment, einen Farbstoff, ein Flammverzögerungsmittel, einen Gammastabilisator oder eine Kombination einschließt, die mindestens einen der obengenannte Zusatzstoffe umfasst; worin die Mengen und Arten der Zusatzstoffe so ausgewählt werden, dass die gewünschten Eigenschaften der thermoplastischen Zusammensetzung nicht signifikant beeinträchtigt werden.

**10.** Die thermoplastische Zusammensetzung gemäß Anspruch 9,
worin die Zusatzstoffe in einer Gesamtmenge von weniger als oder gleich 5 Gewichtsprozent, basierend auf dem Gesamtgewicht des Polyester-Polycarbonats und des Poly(alkylenesters), vorhanden sind.

**11.** Ein Verfahren zum Formen einer thermoplastischen Zusammensetzung, das eine Schmelze umfasst, die folgendes kombiniert:

ein Polyester-Polycarbonat, das Isophthalat-Terephthalat-Resorcinolestereinheiten und Carbonateinheiten in einem Molverhältnis von 20:80 bis 80:20 umfasst, und
ein Poly(alkylenester), das Ethylenterephthalat-Einheiten und 1,4-Cyclohexyldimethylenterephthalat-Einheiten in einem Molverhältnis von 20:80 bis 95:5 umfasst,

worin das Polyester-Polycarbonat-Polymer und das Poly (alkylenester)-Polymer in der thermoplastischen Zusammensetzung in einem Gewichtsverhältnis von 20:80 bis 80:20 vermengt werden,
worin das Polyester-Polycarbonat und der Polyalkylenester so ausgewählt werden, dass die Summe des Molprozentsatzes der Isophthalat-Terephthalat-Resorcinol-Estereinheiten im Polyester-Polycarbonat-Polymer und des Molprozentsatzes der 1,4-Cyclohexandimethylenterephthalat-Einheiten im Poly (alkylenterephthalat)-Polymer ein Wert größer als 40 ist, und
worin ein geformter Artikel mit einer Dicke von 2,5 mm, der aus dem Polyester-Polycarbonat, dem Poly(alkylenester)-Polymer und weniger als oder gleich 5 Gewichtsprozent eines Zusatzstoffes besteht, eine Trübung von weniger als oder gleich 5 %, gemessen nach ASTM D1003-00, hat.

**12.** Die thermoplastische Zusammensetzung, die durch das Verfahren gemäß Anspruch 11 hergestellt wird.

**13.** Ein Artikel, der die Zusammensetzung gemäß Anspruch 1 umfasst.

## Revendications

**1.** Composition thermoplastique comprenant :

un polymère poly(ester)-poly(carbonate) comprenant des motifs ester d'isophtalate-téréphtalate-résorcinol et des motifs carbonate en un rapport molaire de 20 : 80 à 80 : 20, et
un poly(ester d'alkylène) comprenant des motifs téréphtalate d'éthylène et des motifs téréphtalate de 1,4-cyclohexyldiméthylène en un rapport molaire de 20 : 80 à 95 : 5,

dans laquelle le polymère poly(ester)-poly(carbonate) et le polymère poly(ester d'alkylène) sont présents dans la composition thermoplastique en un rapport en poids de 20 : 80 à 80 : 20,
dans laquelle la somme des valeurs de pourcentage en mole des motifs ester d'isophtalate-téréphtalate-résorcinol dans le polymère de poly(ester)-poly(carbonate) et des valeurs de pourcentage en mole des motifs téréphtalate de 1,4-cyclohexanediméthylène dans le polymère poly(ester d'alkylène) est une valeur supérieure à 40, et
dans laquelle un article moulé d'une épaisseur de 2,5 mm et constitué par le poly(ester)-poly(carbonate), le polymère poly(ester d'alkylène), et 5 pour cent en poids ou moins d'un additif, a une trouble inférieur ou égal à 5 %, mesuré selon la norme ASTM D1003-00.

**2.** Composition thermoplastique selon la revendication 1, dans laquelle le polymère poly(ester)-poly(carbonate) comprend des motifs ester supplémentaires.

**3.** Composition thermoplastique selon la revendication 2, dans laquelle les motifs ester supplémentaires comprennent des esters isophtalate-téréphtalate de composés dihydroxy de formule

$$HO-A^1-Y-A^2-OH$$

dans laquelle $A^1$ et $A^2$ sont chacun un radical aryle divalent monocyclique et Y est un radical de pontage comportant

un ou deux atomes qui séparent $A^1$ de $A^2$.

**4.** Composition thermoplastique selon la revendication 1, dans laquelle un article moulé d'une épaisseur de 2,5 mm et constitué par le poly(ester)-poly(carbonate), le polymère poly(ester d'alkylène) et 5 pour cent en poids ou moins d'un additif, a un trouble supérieur ou égal à 80 % mesuré selon la norme ASTM D1003-00.

**5.** Composition thermoplastique selon la revendication 1, dans laquelle les motifs ester d'isophtalate-téréphtalate-résorcinol ont la structure :

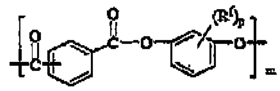

dans laquelle chaque $R^f$ est indépendamment un atome d'halogène, un groupe hydrocarbure en $C_{1\ à\ 12}$ ou un groupe hydrocarbure en $C_{1\ à\ 12}$ substitué par un halogène ; p vaut 0 à 4 ; et m vaut 2 à 500.

**6.** Composition thermoplastique selon la revendication 5, dans laquelle le poly(ester)-poly(carbonate) a la structure :

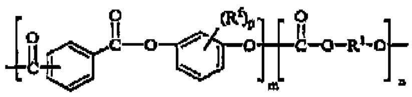

dans laquelle chaque $R^f$ est indépendamment un atome d'halogène, un groupe hydrocarbure en $C_{1\ à\ 12}$ ou un groupe hydrocarbure en $C_{1\ à\ 12}$ substitué par un halogène ; p vaut 0 à 4, chaque $R^1$ est indépendamment un groupe arylène en $C_{6\ à\ 30}$, m vaut 2 à 500 et n vaut 2 à 500.

**7.** Composition thermoplastique selon la revendication 6, dans laquelle le poly(ester)-poly(carbonate) est un poly(ester d'isophtalate-téréphtalate-résorcinol)-co-(carbonate de bisphénol A).

**8.** Composition thermoplastique selon la revendication 1, dans laquelle le poly(ester d'alkylène) est un poly(éthylène téréphtalate)-co-(téréphtalate de 1,4-cyclohexyldiméthylène).

**9.** Composition thermoplastique selon la revendication 1, dans laquelle la composition thermoplastique comprend un additif incluant un antioxydant, un stabilisant thermique, un photostabilisant, un absorbeur de lumière ultraviolette, un plastifiant, un agent de démoulage, un lubrifiant, un agent antistatique, un pigment, un colorant, un ignifuge, un stabilisateur gamma ou une combinaison comprenant au moins l'un des additifs précités ; dans laquelle les quantités et les types des additifs sont sélectionnés de sorte que les propriétés souhaitées de la composition thermoplastique ne sont pas affectées de manière significativement défavorable.

**10.** Composition thermoplastique selon la revendication 9, dans laquelle les additifs sont présents en une quantité totale inférieure ou égale à 5 % en poids, par rapport au poids total du poly(ester)-poly(carbonate) et du poly(ester d'alkylène).

**11.** Procédé de formation d'une composition thermoplastique comprenant une fusion combinant :

un poly(ester)-poly(carbonate) comprenant des motifs ester isophtalate-téréphtalate-résorcinol et des motifs carbonate en un rapport molaire de 20 : 80 à 80 : 20, et
un poly(ester d'alkylène) comprenant des motifs téréphtalate d'éthylène et des motifs téréphtalate de 1,4-cyclohexyldiméthylène en un rapport molaire de 20 : 80 à 95 : 5,

dans lequel le polymère de poly(ester)-poly(carbonate) et le polymère de poly(ester d'alkylène) sont mélangés en fusion dans la composition thermoplastique en un rapport en poids de 20 : 80 à 80 : 20,
dans lequel le poly(ester)-poly(carbonate) et le poly(ester d'alkylène) sont sélectionnés de sorte que la somme du pourcentage en mole des motifs ester d'isophtalate-téréphtalate-résorcinol dans le polymère poly(ester)-poly(carbonate) et le pourcentage en mole des motifs téréphtalate de 1,4-cyclohexanediméthylène dans le polymère de poly(téréphtalate d'alkylène), est une valeur supérieure à 40, et
dans lequel un article moulé d'une épaisseur de 2,5 mm et constitué par le poly(ester)-poly(carbonate), le polymère poly(ester d'alkylène), et 5 pour cent en poids ou moins d'un additif, a un trouble inférieur ou égal à 5 %, mesuré selon la norme ASTM D1003-00.

**12.** Composition thermoplastique préparée par le procédé de la revendication 11.

**13.** Article comprenant la composition de la revendication 1.